# FASCICULE DE BREVET EUROPEEN

(11) **EP 1 061 630 B1**
(45) Date de publication et mention de la délivrance du brevet: **21.10.2009**
(21) Numéro de dépôt: 99111447.1
(22) Date de dépôt: 11.06.1999
(51) Int. Cl.: H02J 7/00, G04C 10/00

(54) **Procédé de contrôle de la charge d'un accumulateur et dispositif pour la mise en oeuvre de ce procédé**
Verfahren und Vorrichtung zur Steuerung des Ladens eines Akkumulators
Method and apparatus for controlling the charge of an accumulator

(43) Date de publication de la demande: 20.12.2000
(73) Titulaire: ASULAB S.A., 2074 Marin (CH)
(72) Inventeur: Martin, Jean-Claude, 2000 Neuchâtel (CH); Guanter, Jean-Charles, 2517 Diesse (CH)
(74) Mandataire: Ravenel, Thierry Gérard Louis

(56) Documents cités:
- EP-A- 0 288 013
- EP-A- 0 874 294
- DE-A- 4 112 987
- US-A- 4 307 330

## Description

La présente invention concerne un procédé de contrôle de la charge d'un accumulateur ainsi qu'un dispositif pour la mise en oeuvre de ce procédé. Il s'agit en particulier d'accumulateurs destinés à des applications sans fil comme les montres, les téléphones portables, les caméras vidéo et autres.

Pour le bon fonctionnement d'une montre électronique classique, une simple pile à basse tension est suffisante. Les mouvements qui équipent ce type de montres consomment en effet des courants très faibles de l'ordre de quelques microampères sous des tensions n'excédant habituellement pas 1,5 V. Les piles à basse tension confèrent à ces montres une autonomie qui est généralement d'environ deux ans.

On cherche toutefois actuellement à intégrer dans la montre des dispositifs auxiliaires supplémentaires tels que, par exemple, un dispositif émetteur/récepteur associé à une antenne permettant d'utiliser la montre à la manière d'un téléphone. Un tel dispositif nécessite des courants et des tensions très supérieurs à ceux que requiert la seule fonction horlogère. A titre d'exemple, lorsque la liaison radiofréquence est en service, la consommation électrique s'établit à des valeurs supérieures à 50 mA pour des tensions qui excèdent 2,5 V. Face à de tels besoins en énergie, les piles ne peuvent pas assurer une alimentation convenable car elles s'épuiseraient très rapidement, ce qui obligerait le porteur de la montre à les remplacer fréquemment. Pour pallier cet inconvénient, il a donc été décidé de recourir à des accumulateurs rechargeables pour alimenter les fonctions auxiliaires. Pour des raisons de coût et d'encombrement, la pile a été supprimée et la fonction horlogère, dont la consommation est minime, est également alimentée par les accumulateurs.

Pour charger un accumulateur, différents procédés sont connus. Parmi ces procédés, le plus couramment utilisé est celui connu sous le nom de procédé de charge rapide qui consiste à injecter dans l'accumulateur, dans des limites fixées par le fabricant, un courant constant d'autant plus important que l'on désire que la charge soit rapide. La difficulté que présente un tel procédé consiste à déterminer à quel moment arrêter la charge, sachant que quelques minutes de surcharge diminuent, par échauffement, la durée de vie de l'accumulateur, et que quelques dizaines de minutes excédentaires peuvent mettre celui-ci hors d'usage ou le détruire.

De nombreux procédés existent pour déterminer la fin de la charge rapide d'un accumulateur lorsque celui-ci a atteint sa charge nominale. Ces procédés sont caractérisés par leur temps de réaction après la fin de la charge. Ce temps de réaction doit être le plus court possible afin de protéger l'accumulateur contre toute surchauffe éventuelle. Ces procédés sont également caractérisés par leur fiabilité, leur répétitivité et leur coût.

La méthode la plus classique utilise la courbe caractéristique de tension de charge de l'accumulateur. Quand l'accumulateur est plein, et même légèrement surchargé, la tension diminue légèrement après avoir crû continûment pendant la charge. Cette baisse de tension est détectée par un circuit électronique de contrôle qui décide alors d'arrêter la charge.

Cette méthode présente deux inconvénients. Tout d'abord, lorsque la tension diminue, l'accumulateur est déjà légèrement surchargé et sa température a déjà commencé à croître. Il est donc déjà un peu tard, car c'est l'échauffement qui est la cause première du vieillissement des accumulateurs. Cela est d'autant plus vrai que la charge est rapide. Plus le courant de charge est fort, et plus la surcharge et la surchauffe sont importantes. En second lieu, certains accumulateurs ont une baisse de tension de charge moins accusée qui est donc beaucoup plus difficile à détecter.

Une méthode plus récente consiste à mesurer, non seulement la tension de charge, mais aussi la température de l'accumulateur et à décider l'arrêt de la charge quand le taux d'augmentation de la température dépasse un certain seuil. En effet, la température reste constante pendant presque toute la charge et commence à augmenter de plus en plus fortement vers la fin de celle-ci. Avec cette méthode de mesure de la température, la charge est arrêtée à un moment où la température augmente à une vitesse supérieure à un certain taux fixé par avance.

Un inconvénient de cette méthode est qu'elle nécessite un capteur de température sur chaque accumulateur, ainsi qu'un ou deux contacts supplémentaires à la connexion accumulateur-chargeur. Ceci est parfois d'un coût très élevé. Un deuxième inconvénient de cette méthode est que la température se propage lentement du coeur de la batterie à sa périphérie puis au capteur. Autrement dit, quand la charge est arrêtée, l'accumulateur a déjà eu le temps de trop chauffer.

Par opposition aux procédés de charge rapide décrits ci-dessus, on peut également recourir à des procédés dits de charge lente qui consistent à injecter dans l'accumulateur un courant dont l'intensité est faible comparée à sa capacité. Par exemple, un courant constant de 10 mA peut être appliqué en permanence à un accumulateur de 100 mAh sans risque de l'endommager. Pour des courants de charge plus élevés, de l'ordre de 20 mA à 30 mA, il est possible de définir la fin de la charge de l'accumulateur en fonction du temps durant lequel celui-ci a été sur le chargeur.

Cette dernière solution présente néanmoins un inconvénient important. En effet, si l'on tient uniquement compte du temps qui s'est écoulé depuis le moment où l'on a mis l'accumulateur sur le chargeur, le fait d'enlever puis de remettre immédiatement l'accumulateur sur le chargeur relance complètement le délai de charge. Le même problème se pose en cas de micro-coupure dans le réseau d'alimentation électrique ou lorsque le chargeur subit un choc qui interrompt momentanément la connexion électrique entre celui-ci et l'accumulateur.

Un tel procédé et dispositif de contrôle est décrit dans le document EP 0 288 013.

La présente invention a pour but de remédier aux problèmes et inconvénients ci-dessus en proposant un procédé de contrôle de la charge d'un accumulateur permettant de stopper la charge de l'accumulateur avant que l'échauffement ne survienne, et donc avant d'être en surcharge, cela sans nécessiter de dispositif complexe et coûteux.

A cet effet, la présente invention a pour objet un procédé pour contrôler la charge d'un accumulateur en fonction du temps durant lequel cet accumulateur a été sur un chargeur, ledit accumulateur étant destiné à alimenter une fonction horlogère et une ou plusieurs fonctions auxiliaires, ce procédé comportant les étapes qui consistent à :
- incrémenter un signal de comptage pas à pas pendant le temps de charge durant lequel l'accumulateur est sur le chargeur;
- provoquer l'arrêt de la charge de l'accumulateur lorsque le signal de comptage a atteint une valeur maximale préalablement définie correspondant à la charge nominale dudit accumulateur, et
- décrémenter le signal de comptage pas à pas pendant le temps de décharge durant lequel l'accumulateur n'est pas sur le chargeur, caractérisé en ce que le signal de comptage est décrémenté avec un premier pas lorsque seule la fonction horlogère est utilisée, et avec un deuxième pas qui diffère du premier et qui dépend de la ou dès fonctions auxiliaires utilisées de sorte que, si le signal de comptage arrive à zéro, la prochaine charge sera faite jusqu'à ce que ledit signal de comptage ait à nouveau atteint sa valeur maximale, tandis que si l'accumulateur est remis sur le chargeur avant que le signal de comptage n'ait atteint zéro, la prochaine charge sera faite pour une durée réduite.

Grâce à ces caractéristiques, la présente invention procure un procédé de contrôle de la charge d'un accumulateur qui permet d'interrompre la charge de l'accumulateur suffisamment tôt pour que, quelles que soient les circonstances, ledit accumulateur n'ait pas le temps de trop chauffer, ce qui augmente de manière significative sa durée de vie. D'autre part, contrairement à l'art antérieur, la présente invention ne nécessite pas de dispositif électronique complexe et coûteux, par exemple pour surveiller l'évolution de la tension de charge ou mesurer la température de l'accumulateur, ce qui permet de réaliser des économies substantielles.

Selon un autre avantage de l'invention, on compte non seulement le temps de charge de l'accumulateur, mais également le temps pendant lequel celui-ci n'est pas sur le chargeur, en n'autorisant une nouvelle charge complète de l'accumulateur que si le compteur atteint zéro. Ainsi, si par exemple une micro-coupure survient dans le réseau d'alimentation électrique, le délai de charge n'est pas complètement relancé, ce qui permet d'éviter toute surcharge néfaste pour l'accumulateur.

Selon une autre caractéristique de l'invention, quelle que soit l'interruption de la charge de l'accumulateur qui survient avant que le signal de comptage ait atteint sa valeur maximale correspondant à la charge nominale de cet accumulateur, le pas avec lequel ledit signal de comptage est décrémenté est celui que l'on aurait observé pour une même fonction auxiliaire après avoir atteint ladite valeur maximale.

Inversement, si l'accumulateur est remis sur le chargeur avant que le signal de comptage ne soit arrivé à zéro, seule une charge partielle est autorisée, et le pas avec lequel ledit signal de comptage est incrémenté est le même que celui que l'on aurait utilisé pour une charge complète.

La présente invention concerne également un dispositif pour contrôler la charge d'un accumulateur en fonction du temps durant lequel cet accumulateur a été sur un chargeur, ledit accumulateur étant destiné à alimenter une fonction horlogère et une ou plusieurs fonctions auxiliaires, ce dispositif comprenant un circuit électronique de commande adapté pour incrémenter un compteur pas à pas pendant le temps de charge durant lequel l'accumulateur est sur le chargeur, et pour provoquer l'arrêt de la charge de cet accumulateur lorsque le compteur a atteint une valeur maximale correspondant à la charge nominale dudit accumulateur, et pour décrémenter le compteur pas à pas pendant le temps de décharge durant lequel l'accumulateur n'est pas sur le chargeur, caractérisé en ce que le compteur est adapté pour être décrémenté avec un premier pas lorsque seule la fonction horlogère est utilisée, et avec un deuxième pas qui diffère du premier et qui dépend de la ou des fonctions auxiliaires utilisées de sorte que, si le compteur arrive à zéro, la prochaine charge autorisée par le circuit électronique de commande sera faite jusqu'à ce que le compteur ait à nouveau atteint sa valeur maximale, tandis que si l'accumulateur est remis sur le chargeur avant que le compteur n'ait atteint zéro, le circuit électronique de commande n'autorise qu'une charge partielle de l'accumulateur.

D'autres caractéristiques et avantages de la présente invention apparaîtront plus clairement à la lecture de la description détaillée qui suit d'un exemple de mise en oeuvre du procédé selon l'invention, cet exemple étant donné à titre purement illustratif et non limitatif, en liaison avec les dessins annexés dans lesquels :
- la figure 1 est une représentation schématique d'un circuit électronique de commande destiné à mettre en oeuvre le procédé selon l'invention;
- la figure 2 est une représentation graphique d'une succession de cycles de charge/décharge d'un accumulateur selon le procédé conforme à l'invention;
- la figure 3 est une représentation graphique d'un cycle de charge/décharge de l'accumulateur dans lequel le compteur est décrémenté et arrive à zéro où une nouvelle charge complète dudit accumulateur est autorisée selon un pas qui varie en fonction de l'intensité du courant délivré par cet accumulateur en cours d'utilisation;
- la figure 4 est une représentation graphique d'un cycle de charge/décharge de l'accumulateur lorsque celui-ci est remis sur le chargeur avant que le compteur ne soit arrivé à zéro;
- la figure 5 est une représentation graphique d'un cycle de charge/décharge de l'accumulateur lorsque celui-ci est retiré du chargeur avant que le compteur ne soit arrivé à sa valeur maximale CPTMAX correspondant à la charge nominale dudit accumulateur, et
- la figure 6 illustre le cas où l'accumulateur est laissé sur le chargeur après que le compteur soit arrivé à sa valeur maximale CPTMAX correspondant à la charge nominale de l'accumulateur, et où l'on autorise à intervalles de temps réguliers une charge partielle de l'accumulateur afin de maintenir la charge de ce dernier.

La présente invention procède de l'idée générale inventive qui consiste non seulement à compter le temps de charge de l'accumulateur, mais également à décompter le temps pendant lequel l'accumulateur n'est pas sur le chargeur, de sorte que si l'on retire puis que l'on remet immédiatement l'accumulateur sur le chargeur, cela ne relance pas complètement le délai de charge, ce qui permet avantageusement d'éviter toute surcharge de l'accumulateur. De même, la valeur CPTMAX du compteur au-delà de laquelle la charge de l'accumulateur est interrompue est ajustée en fonction de l'intensité du courant de charge, de façon que la charge nominale de l'accumulateur soit atteinte sans que celui-ci ait eu le temps de trop chauffer.

La présente invention va être décrite en référence à une pièce d'horlogerie équipée de dispositifs auxiliaires forts consommateurs d'énergie tels que, par exemple, un dispositif émetteur/récepteur associé à une antenne permettant d'utiliser ladite pièce d'horlogerie à la façon d'un téléphone. Il va néanmoins de soi que la présente invention s'applique de manière analogue à tous types de dispositifs portables comportant une base de temps et des accumulateurs tels qu'une caméra vidéo, un téléphone portable ou autres.

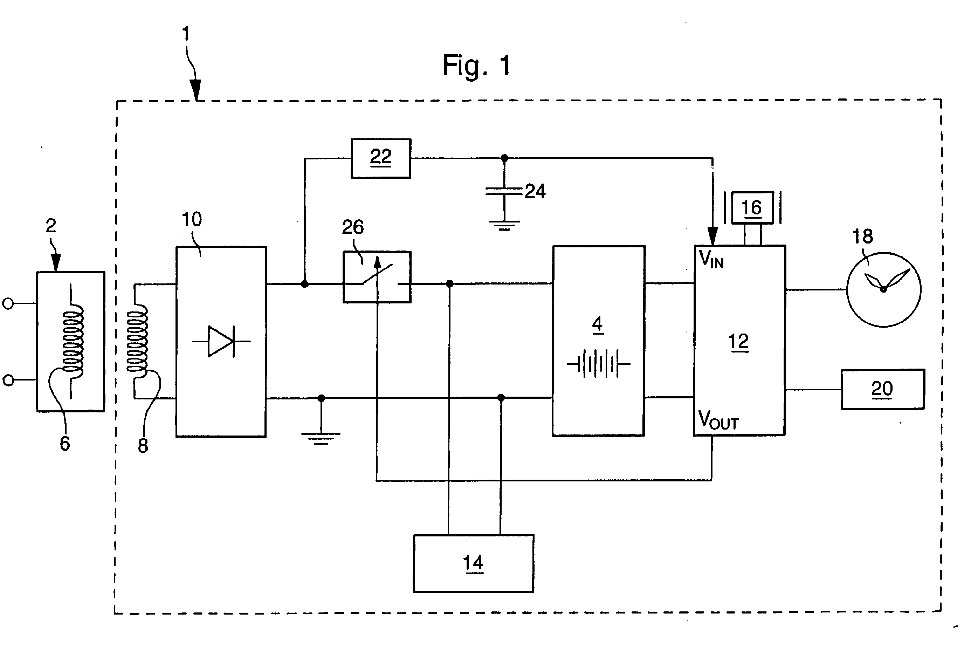

On a représenté à la figure 1 le dispositif de contrôle de la charge d'un accumulateur conforme à l'invention. Ce dispositif est désigné dans son ensemble par la référence numérique générale 1. Il s'agit d'un système portable relié électriquement à un chargeur 2 destiné à charger un accumulateur 4. Dans l'exemple représenté à la figure 1, l'accumulateur 4 est chargé par induction. A cet effet, une première bobine 6 constitue le primaire du chargeur 2, tandis qu'une seconde bobine 8 placée dans le circuit de charge de l'accumulateur 4 constitue le secondaire dudit chargeur 2. Comme l'accumulateur 4 est destiné à équiper une montre, on préfère en effet recharger celui-ci par induction plutôt que d'utiliser des contacts ohmiques pour le connecter au chargeur 2, ceci afin d'éviter les problèmes de corrosion des contacts métalliques et d'altérer l'étanchéité de la boîte de la montre. On comprendra néanmoins que le procédé conforme à la présente invention peut être mis en oeuvre quel que soit le type de chargeur utilisé pour recharger l'accumulateur 4. L'accumulateur 4 est alimenté en courant continu à travers un circuit redresseur 10 qui redresse le courant issu du couplage magnétique entre les deux bobines 6 et 8. L'accumulateur 4 alimente à son tour un circuit électronique de commande 12 ainsi qu'un ou plusieurs dispositifs auxiliaires 14 tels que, par exemple, un dispositif émetteur/récepteur relié électriquement à une antenne afin de pouvoir utiliser la montre à la manière d'un téléphone.

On s'intéresse maintenant en détail au mode de fonctionnement du circuit électronique de commande 12. Conformément à l'invention, celui-ci est constitué par un processeur horloger comprenant une base de temps et un compteur incrémentiel apte à compter les temps de charge/décharge de l'accumulateur 4. La base de temps est fournie au processeur horloger par un oscillateur à quartz 16. Le circuit de commande 12 peut commander un affichage horaire analogique 18 ainsi que, par exemple, un dispositif d'affichage 20 à cristaux liquides.

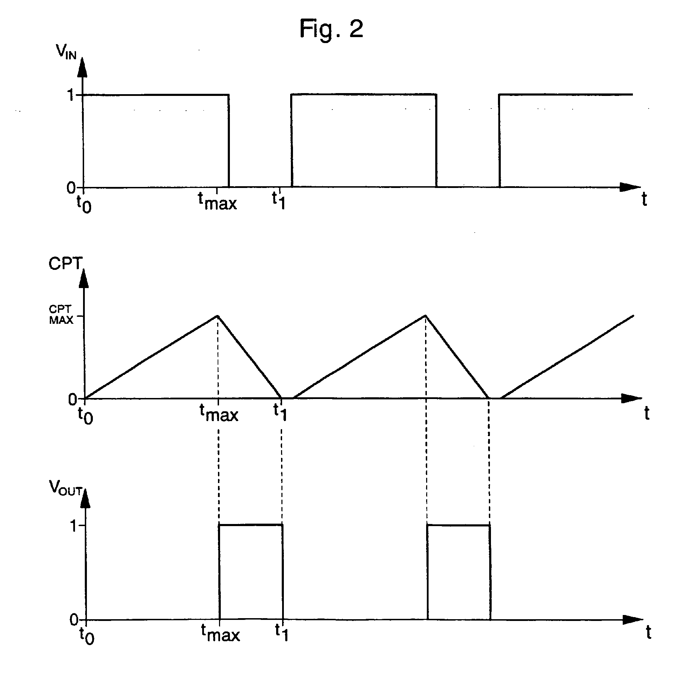

Comme il ressort de la figure 1, un signal de contrôle de charge V_{IN} est prélevé à la sortie du circuit redresseur 10 et est appliqué à travers une résistance 22 et un condensateur 24 à l'entrée du circuit de commande 12. Ce signal de contrôle de charge V_{IN} est mis à 1 (figure 2) à l'instant t₀ où l'accumulateur 4 est placé sur le chargeur 2 et commence à être chargé avec un courant de charge continu. Au moment où le signal de contrôle V_{IN} passe à 1, le circuit de commande 12 commence à compter le temps de charge. Le signal de comptage CPT augmente alors progressivement de zéro jusqu'à une valeur maximale CPTMAX où le temps de charge atteint une valeur limite tₘₐₓ correspondant à la charge nominale de l'accumulateur 4. Le pas avec lequel le signal de comptage CPT est incrémenté est modulé en fonction de l'intensité du courant de charge que l'on injecte dans l'accumulateur 4, de façon que ce dernier atteigne sa charge nominale sans avoir eu le temps de trop chauffer. On comprend que le signal de comptage CPT augmente d'autant plus rapidement que le courant de charge est élevé.

Au moment où le signal de comptage atteint sa valeur maximale CPTMAX, le circuit de commande 12 provoque l'arrêt de la charge de l'accumulateur 4 en mettant à 1 un signal d'interruption de charge V_{OUT}. Ce signal d'interruption V_{OUT} est appliqué à des moyens d'interruption tels qu'un interrupteur 26 dont il commande l'ouverture, ce qui a pour effet d'ouvrir le circuit de charge de l'accumulateur 4.

Dans le cas le plus simple où l'on retire l'accumulateur 4 du chargeur 2 peu de temps après l'instant tₘₐₓ où cet accumulateur 4 a atteint sa charge nominale, le signal de contrôle de charge V_{IN} est mis à zéro, le signal d'interruption de charge V_{OUT} reste à 1, et le circuit de commande 12 commence à décompter le temps de décharge pendant lequel l'accumulateur 4 n'est plus sur le chargeur 2. Le signal de comptage CPT diminue alors progressivement de sa valeur maximale CPTMAX jusqu'à zéro où le temps de décharge atteint une valeur t₁ au-delà de laquelle le circuit de commande 12 autorise à nouveau une charge complète de l'accumulateur 4. Ceci provoque le passage du signal d'interruption V_{OUT} à zéro, de sorte que le circuit de charge de l'accumulateur 4 se referme et qu'une nouvelle charge de ce dernier peut reprendre. Ensuite, lorsque l'accumulateur 4 est remis sur le chargeur 2, le signal de contrôle de charge V_{IN} est remis à 1 et le circuit de commande 12 recommence à incrémenter le compteur pendant le temps durant lequel l'accumulateur 4 est sur le chargeur 2.

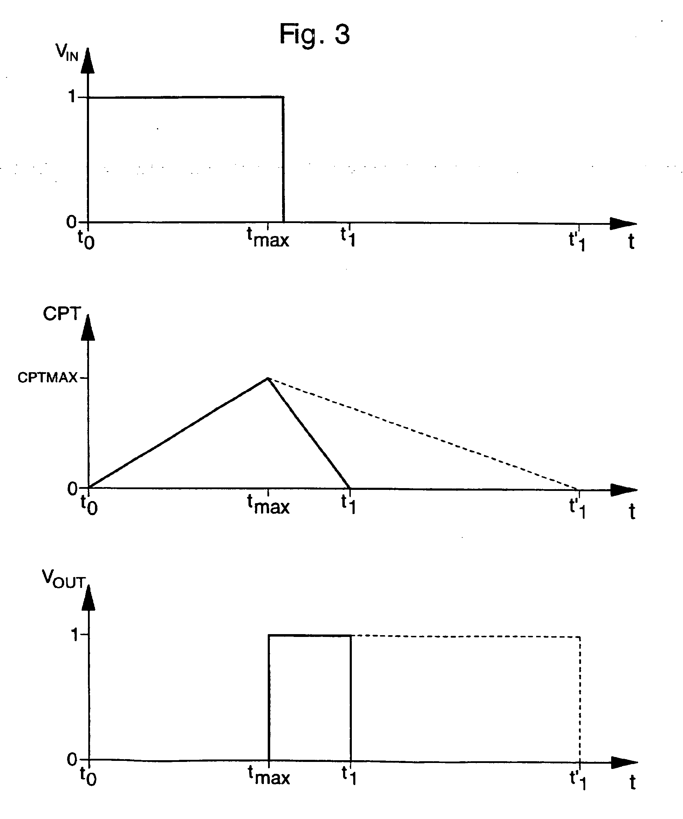

Selon une caractéristique particulièrement avantageuse de l'invention, la vitesse avec laquelle on décrémente le compteur à partir du moment où l'accumulateur 4 n'est plus sur le chargeur 2 n'est pas fixée de manière définitive, mais est modulée en fonction du courant de décharge délivré par ledit accumulateur 4 (figure 3). Ainsi, si l'accumulateur 4 alimente uniquement la fonction horlogère de la montre qui consomme très peu de courant, la vitesse avec laquelle on décrémente le signal de comptage CPT sera faible, de sorte que le temps t'₁ où le signal de comptage CPT arrive à zéro et au-delà duquel une nouvelle charge complète de l'accumulateur 4 peut être autorisée sera sensiblement augmenté, c'est-à-dire que l'on autorisera moins vite une nouvelle charge dudit accumulateur 4. Inversement, si le porteur de la montre fait un usage intensif par exemple de la fonction téléphonique qui consomme beaucoup d'énergie, la vitesse avec laquelle on décrémente le signal de comptage CPT sera plus élevée, de sorte que le temps t₁ où le signal de comptage CPT arrive à zéro et au-delà duquel une nouvelle charge complète de l'accumulateur 4 sera autorisée sera sensiblement diminué.

Selon une caractéristique complémentaire de l'invention, la vitesse avec laquelle on incrémente le signal de comptage CPT est différente de la vitesse avec laquelle on décrémente ce même signal de comptage CPT.

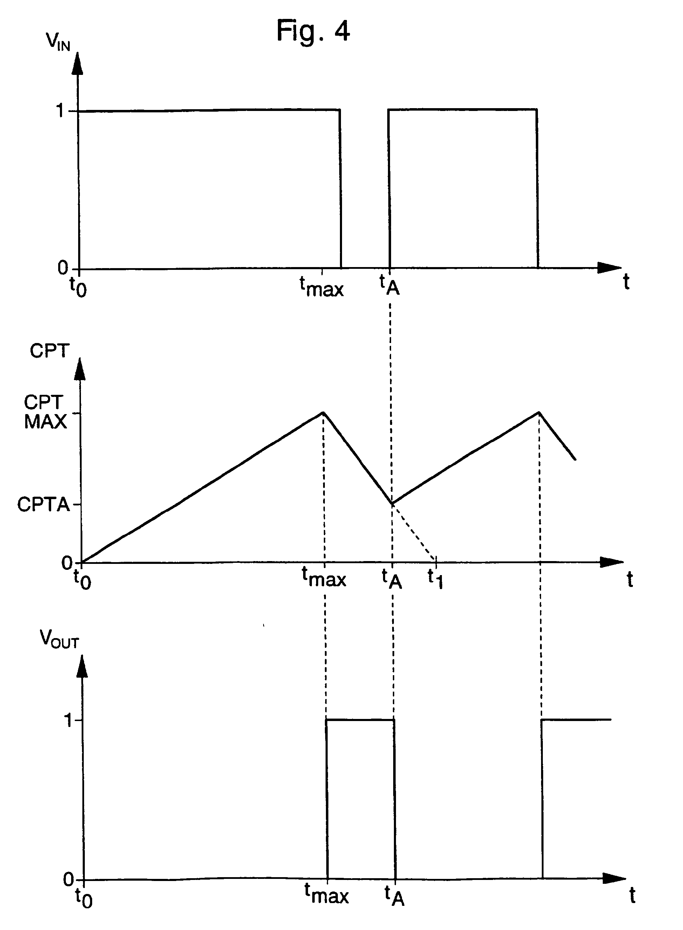

On examine maintenant le cas (figure 4) où l'accumulateur 4 est replacé sur le chargeur 2 à un instant t_{A} avant que le signal de comptage CPT ne soit arrivé à zéro, c'est-à-dire avant que le circuit de commande 12 ne puisse autoriser une nouvelle charge complète dudit accumulateur 4. Dans ce cas, le circuit de commande 12 autorise une charge partielle de l'accumulateur 4. Le signal de comptage CPT augmente alors progressivement d'une valeur CPTA qu'il avait à l'instant t_{A} jusqu'à sa valeur maximale CPTMAX correspondant à la charge nominale de l'accumulateur 4. On remarquera que la pente de croissance du signal de comptage CPT après l'instant t_{A} où l'accumulateur 4 est placé sur le chargeur 2 est la même que celle que l'on aurait obtenue avant que le signal de comptage CPT n'ait atteint sa valeur CPTMAX.

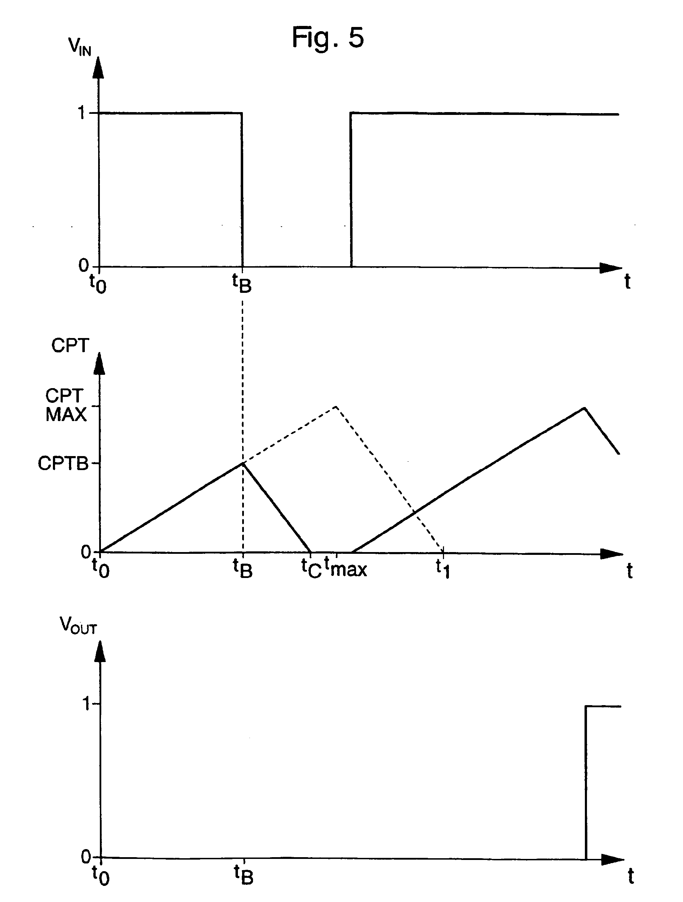

Inversement, on peut supposer (figure 5) que l'accumulateur 4 est retiré du chargeur 2 à un instant t_{B} avant que le signal de comptage CPT ne soit arrivé à sa valeur maximale CPTMAX, c'est-à-dire avant que l'accumulateur 4 n'ait atteint sa charge nominale. Dans ce cas, le signal de comptage CPT diminue progressivement d'une valeur CPTB qu'il avait à l'instant t_{B} jusqu'à zéro où le temps de décharge atteint la valeur t_{C} au-delà de laquelle le circuit de commande 12 autorise à nouveau une charge complète de l'accumulateur 4. On remarque que la pente de décroissance du signal de comptage CPT après l'instant t_{B} où l'accumulateur 4 est retiré du chargeur 2 est la même que celle que l'on aurait obtenue pour une même fonction auxiliaire après que le signal de comptage CPT ait atteint sa valeur maximale CPTMAX. Ainsi, le temps nécessaire pour atteindre l'instant t_{C} où une nouvelle charge complète est autorisée est plus court que le temps qui sépare les instants tₘₐₓ et t₁ dans le cas d'un cycle de charge/décharge normal. On remarque, dans ce cas, que le signal d'interruption de charge V_{OUT} reste constamment à zéro dans la mesure où le signal de comptage CPT n'atteint pas sa valeur maximale CPTMAX correspondant à la charge nominale de l'accumulateur 4.

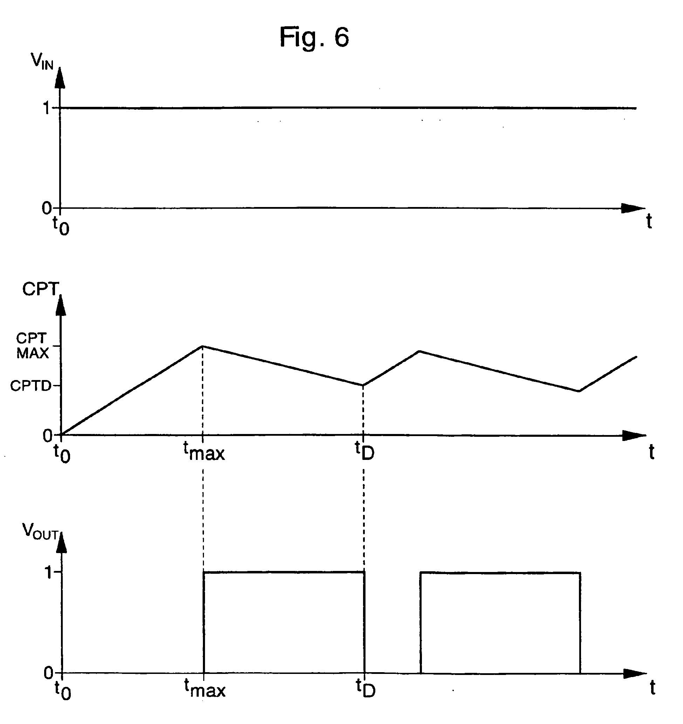

On s'intéresse enfin au cas (figure 6) où l'accumulateur 4 est laissé sur le chargeur 2 après que le signal de comptage CPT ait atteint sa valeur maximale CPTMAX correspondant à la charge nominale de cet accumulateur 4. A l'instant où le signal de comptage CPT atteint la valeur CPTMAX, le signal d'interruption de charge V_{OUT} est mis à 1 et l'accumulateur 4 n'est plus alimenté en courant. Dans ce cas, le signal de comptage CPT diminue progressivement de sa valeur CPTMAX qu'il avait à l'instant tₘₐₓ jusqu'à une valeur CPTD qu'il atteint à un instant t_{D}. A cet instant t_{D}, une charge partielle de l'accumulateur 4 est à nouveau autorisée et le signal d'interruption de charge V_{OUT} est mis à zéro. On comprendra que la pente de décroissance du signal de comptage CPT est faible et déterminée en tenant compte du courant d'auto-décharge de l'accumulateur 4, et que l'on autorise une nouvelle charge pour obtenir le maintien de la charge de l'accumulateur 4 une fois que la valeur minimum t_{D} admise pour le temps d'auto-décharge est atteinte.

Il va de soi que diverses variantes et modifications simples entrent dans le cadre de la présente invention.

## Revendications

1. Procédé pour contrôler la charge d'un accumulateur (4) en fonction du temps durant lequel cet accumulateur (4) a été sur un chargeur (2), ledit accumulateur (4) étant destiné à alimenter une fonction horlogère et une ou plusieurs fonctions auxiliaires (14), ce procédé comportant les étapes qui consistent à :
- incrémenter un signal de comptage (CPT) pas à pas pendant le temps de charge durant lequel l'accumulateur (4) est sur le chargeur (2);
- provoquer l'arrêt de la charge de l'accumulateur (4) lorsque le signal de comptage (CPT) a atteint une valeur maximale (CPTMAX) préalablement définie correspondant à la charge nominale dudit accumulateur (4), et
- décrémenter le signal de comptage (CPT) pas à pas pendant le temps de décharge durant lequel l'accumulateur (4) n'est pas sur le chargeur (2), **caractérisé en ce que** le signal de comptage (CPT) est décrémenté avec un premier pas lorsque seule la fonction horlogère est utilisée, et avec un deuxième pas qui diffère du premier et qui dépend de la ou des fonctions auxiliaires (14) utilisées de sorte que, si le signal de comptage (CPT) arrive à zéro, la prochaine charge sera faite jusqu'à ce que ledit signal de comptage (CPT) ait à nouveau atteint sa valeur maximale (CPTMAX), tandis que si l'accumulateur (4) est remis sur le chargeur (2) avant que le signal de comptage (CPT) n'ait atteint zéro, la prochaine charge sera faite pour une durée réduite.

2. Procédé selon la revendication 1, **caractérisé en ce que** quelle que soit l'interruption de la charge de l'accumulateur (4) qui survient avant que le signal de comptage (CPT) ait atteint sa valeur maximale (CPTMAX) correspondant à la charge nominale de cet accumulateur (4), le pas avec lequel ledit signal de comptage (CPT) est décrémenté est celui que l'on aurait observé pour une même fonction auxiliaire (14) après avoir atteint (CPTMAX).

3. Procédé selon l'une quelconque des revendications 1 ou 2, **caractérisé en ce que**, si l'accumulateur (4) est remis sur le chargeur (2) avant que le signal de comptage (CPT) ne soit arrivé à zéro, seule une charge partielle est autorisée, et le pas avec lequel ledit signal de comptage (CPT) est incrémenté est le même que celui que l'on aurait utilisé pour une charge complète.

4. Procédé selon l'une quelconque des revendications 1 à 3, **caractérisé en ce que** la vitesse avec laquelle on incrémente le signal de comptage (CPT) est différente de la vitesse avec laquelle on décrémente ce même signal de comptage (CPT).

5. Procédé selon l'une quelconque des revendications 1 à 4, **caractérisé en ce que** la valeur maximale (CPTMAX) du signal de comptage (CPT) est modulée en fonction de l'intensité du courant de charge que l'on injecte dans l'accumulateur (4).

6. Procédé selon l'une quelconque des revendications 1 à 5, **caractérisé en ce que** si l'accumulateur (4) est laissé sur le chargeur (2) après que le signal de comptage (CPT) ait atteint sa valeur maximale (CPTMAX) correspondant à la charge nominale de cet accumulateur (4), la pente de décroissance du signal de comptage (CPT) est déterminée en tenant compte du courant d'auto-décharge de l'accumulateur (4), et on autorise une nouvelle charge pour obtenir le maintien de la charge de l'accumulateur (4) une fois qu'une valeur minimum (CPTD) admise pour le signal de comptage (CPT) est atteinte.

7. Dispositif pour contrôler la charge d'un accumulateur (4) en fonction du temps durant lequel cet accumulateur (4) a été sur un chargeur (2), ledit accumulateur (4) étant destiné à alimenter une fonction horlogère et une ou plusieurs fonctions auxiliaires (14), ce dispositif comprenant un circuit électronique de commande (12) adapté pour incrémenter un compteur pas à pas pendant le temps de charge durant lequel l'accumulateur (4) est sur le chargeur (2), et provoquer l'arrêt de la charge de cet accumulateur (4) lorsque le compteur a atteint une valeur maximale (CPTMAX) correspondant à la charge nominale dudit accumulateur (4), et pour décrémenter pour le compteur pas à pas pendant le temps de décharge durant lequel l'accumulateur (4) n'est pas sur le chargeur (2), **caractérisé en ce que** le compteur est adapté pour être décrémenté avec un premier pas lorsque seule la fonction horlogère est utilisée, et avec un deuxième pas qui diffère du premier et qui dépend de la ou des fonctions auxiliaires (14) utilisées de sorte que, si le compteur arrive à zéro, la prochaine charge autorisée par le circuit électronique de commande (12) sera faite jusqu'à ce que le compteur ait à nouveau atteint sa valeur (CPTMAX), tandis que si l'accumulateur (4) est remis sur le chargeur (2) avant que le compteur n'ait atteint zéro, le circuit électronique de commande (12) n'autorise qu'une charge partielle de l'accumulateur (4).

8. Dispositif selon la revendication 7, **caractérisé en ce que** le circuit électronique de commande (12) est adapté pour commencer à incrémenter le compteur à partir du moment où un signal de contrôle de charge (V_{IN}) indiquant que l'accumulateur (4) est placé sur le chargeur (2) lui est appliqué, et **en ce que** ledit circuit électronique de commande (12) est adapté pour produire un signal d'interruption de charge (V_{OUT}) sous l'effet duquel la charge de l'accumulateur (12) est interrompue lorsque le compteur a atteint la valeur maximale (CPTMAX) correspondant à la charge nominale dudit accumulateur (4).

9. Dispositif selon la revendication 8, **caractérisé en ce que** le signal d'interruption de charge (V_{OUT}) commande l'ouverture de moyens d'interruption.

10. Dispositif selon la revendication 9, **caractérisé en ce que** les moyens d'interruption comprennent un interrupteur (26).

11. Dispositif selon l'une quelconque des revendications 7 à 10, **caractérisé en ce que** le circuit électronique de commande (12) est un processeur horloger.

12. Dispositif selon la revendication 11, **caractérisé en ce que** le processeur horloger comprend une base de temps et un compteur incrémentiel.

13. Dispositif selon la revendication 12, **caractérisé en ce que** la base de temps est fournie par un oscillateur à quartz (16).

## Claims

1. Method for controlling the charge of an accumulator (4), as a function of the time during which said accumulator (4) has been on a charger (2), said accumulator (4) being intended to power an horological function and one or more auxiliary functions (14), this method including the steps of:
- incrementing a step counting signal (CPT) during the charge time during which the accumulator (4) is on the charger (2);
- causing the accumulator (4) charge to stop when the counting signal (CPT) has reached a previously defined maximum value (CPTMAX) corresponding to the nominal charge of said accumulator (4); and
- decrementing the step counting signal (CPT) during the discharge time during which the accumulator (4) is not on the charger (2), **characterised in that** the counting signal (CPT) is decremented by a first step when only the horological function is being used, and by a second step which differs from the first and which depends on the auxiliary function or functions (14) used so that, if the counting signal (CPT) reaches zero, the next charge will be made until said counting signal (CPT) has again reached its maximum value (CPTMAX), whereas if the accumulator (4) is replaced on the charger (2) before the counting signal (CPT) has reached zero, the next charge will be made for a shorter period of time.

2. Method according to claim 1, **characterised in that** whatever interruption occurs to the charging of the accumulator (4) before the counting signal (CPT) has reached its maximum value (CPTMAX) corresponding to the nominal charge of said accumulator (4), the step by which said counting signal (CPT) is decremented is that which would have been observed for the same auxiliary function (14) after having reached (CPTMAX).

3. Method according to claims 1 or 2, **characterised in that**, if the accumulator (4) is replaced on the charger (2) before the counting signal (CPT) has reached zero, only a partial charge is authorised, and the step by which said counting signal (CPT) is incremented is the same as that which would have been used for a complete charge.

4. Method according to any of claims 1 to 3, **characterised in that** the speed at which the counting signal (CPT) is incremented is different from the speed at which the same counting signal (CPT) is decremented.

5. Method according to any of claims 1 to 4, **characterised in that** the maximum value (CPTMAX) of the counting signal (CPT) is modulated as a function of the intensity of the charge current which is injected into the accumulator (4).

6. Method according to any of claims 1 to 5, **characterised in that** if the accumulator (4) is left on the charger (2) after the counting signal (CPT) has reached its maximum value (CPTMAX) corresponding to the nominal charge of said accumulator (4), the negative gradient of the counting signal (CPT) is determined taking account of the self-discharge current of the accumulator (4), and a new charge is authorised in order to maintain the charge of the accumulator (4) once a minimum value (CPTD) accepted for the counting signal (CPT) is reached.

7. Device for controlling an accumulator (4) charge as a function of the time during which said accumulator (4) has been on a charger (2), said accumulator (4) being intended to power a horological function and one or more auxiliary functions (14), this device including an electronic control circuit (12) arranged to increment a step counter during the charge time during which the accumulator (4) is on the charger (2), and to cause the accumulator (4) charge to stop when the counter has reached a maximum value (CPTMAX) corresponding to the nominal charge of said accumulator (4) and decrements the step counter during the discharge time during which the accumulator (4) is not on the charger (2), **characterised in that** the counter is arranged to be decremented by a first step when only the horological function is being used, and by a second step which differs from the first and which depends on the auxiliary function or functions (14) used so that, if the counter reaches zero, the next charge authorised by the electronic control circuit (12) will be made until the counter has again reached its maximum value (CPTMAX), whereas if the accumulator (4) is replaced on the charger (2) before the counter has reached zero, the electronic control circuit (12) only authorises partial charging of the accumulator.

8. Device according to claim 7, **characterised in that** the electronic control circuit (12) is arranged to begin to increment the counter from the moment when a charge control signal (V_{IN}) indicating that the accumulator (4) is placed on the charger (2) is applied thereto, and **in that** said electronic control circuit (12) is arranged to generate a charge interruption signal (V_{OUT}) under the effect of which the charging of the accumulator (4) is interrupted when the current has reached the maximum value (CPTMAX) corresponding to the nominal charge of said accumulator (4).

9. Device according to claim 8, **characterised in that** the charge interruption signal (V_{OUT}) controls the opening of the interruption means.

10. Device according to claim 9, **characterised in that** the interruption means include a switch (26).

11. Device according to any of claims 7 to 10, **characterised in that** the electronic control circuit (12) is a clockwork processor.

12. Device according to claim 11, **characterised in that** the clockwork processor includes a time base and an incremental counter.

13. Device according to claim 12, **characterised in that** the time base is provided by a quartz oscillator (16).

## Patentansprüche

1. Verfahren zum Steuern des Ladens eines Akkumulators (4) bezogen auf die Zeit, während derer dieser Akkumulator (4) in einem Ladegerät (2) gewesen ist, wobei der Akkumulator (4) dazu vorgesehen ist, eine Zeitgeberfunktion und eine oder mehrere Hilfsfunktionen (14) zu versorgen, wobei dieses Verfahren die Schritte umfasst, die darin bestehen:
- ein Zählsignal (CPT) während der Ladezeit, während derer sich der Akkumulator (4) in dem Ladegerät (2) befindet, schrittweise zu inkrementieren;
- das Beenden des Ladens des Akkumulators (4) zu bewirken, wenn das Zählsignal (CPT) einen vorher definierten Maximalwert (CPTMAX) erreicht hat, der der Nennladung des Akkumulators (4) entspricht, und
- das Zählsignal (CPT) während der Entladungszeit, während derer sich der Akkumulator (4) nicht in dem Ladegerät (2) befindet, schrittweise zu dekrementieren, **dadurch gekennzeichnet, dass** das Zählsignal (CPT) mit einer ersten Schrittweite dekrementiert wird, wenn nur die Zeitgeberfunktion verwendet wird, und mit einer zweiten Schrittweite, die sich von der ersten unterscheidet und von der oder den verwendeten Hilfsfunktionen (14) abhängt, dekrementiert wird, so dass, wenn das Zählsignal (CPT) Null erreicht, das nächste Laden erfolgt, bis dieses Zählsignal (CPT) erneut seinen Maximalwert (CPTMAX) erreicht, während dann, wenn der Akkumulator (4) in das Ladegerät (2) zurückgegeben wird, bevor das Zählsignal (CPT) Null erreicht hat, das nächste Laden während einer reduzierten Dauer erfolgt.

2. Verfahren nach Anspruch 1, **dadurch gekennzeichnet, dass** unabhängig von der Art der Unterbrechung des Ladens des Akkumulators (4), die aufgetreten ist, bevor das Zählsignal (CPT) seinen Maximalwert (CPTMAX) erreicht hat, der der Nennladung dieses Akkumulators (4) entspricht, die Schrittweite, mit der das Zählsignal (CPT) dekrementiert wird, jene ist, die für dieselbe Hilfsfunktion (14) eingehalten worden wäre, nachdem (CPTMAX) erreicht worden ist.

3. Verfahren nach einem der Ansprüche 1 oder 2, **dadurch gekennzeichnet, dass**, wenn der Akkumulator (4) in das Ladegerät (2) zurückgegeben wird, bevor das Zählsignal (CPT) Null erreicht hat, nur ein partielles Laden zugelassen wird und die Schrittweite, mit der das Zählsignal (CPT) inkrementiert wird, dieselbe wie jene ist, die für ein vollständiges Laden verwendet worden wäre.

4. Verfahren nach einem der Ansprüche 1 bis 3, **dadurch gekennzeichnet, dass** die Geschwindigkeit, mit der das Zählsignal (CPT) inkrementiert wird, von der Geschwindigkeit, mit der dasselbe Zählsignal (CPT) dekrementiert wird, verschieden ist.

5. Verfahren nach einem der Ansprüche 1 bis 4, **dadurch gekennzeichnet, dass** der Maximalwert (CPTMAX) des Zählsignals (CPT) in Abhängigkeit von der Ladestromstärke, die in den Akkumulator (4) injiziert wird, moduliert wird.

6. Verfahren nach einem der Ansprüche 1 bis 5, **dadurch gekennzeichnet, dass** dann, wenn der Akkumulator (4) in dem Ladegerät (2) gelassen wird, nachdem das Zählsignal (CPT) seinen Maximalwert (CPTMAX) erreicht hat, der der Nennladung dieses Akkumulators (4) entspricht, die Steigung der Abnahme des Zählsignals (CPT) unter Berücksichtigung des Selbstentladungsstroms des Akkumulators (4) bestimmt wird und ein erneutes Laden zugelassen wird, um die Aufrechterhaltung der Ladung des Akkumulators (4) zu erzielen, sobald ein für das Zählsignal (CPT) zugelassener Minimalwert (CPTD) erreicht ist.

7. Vorrichtung zum Steuern des Ladens eines Akkumulators (4) bezogen auf die Zeit, während derer dieser Akkumulator (4) in einem Ladegerät (2) gewesen ist, wobei der Akkumulator (4) dazu vorgesehen ist, eine Zeitgeberfunktion und eine oder mehrere Hilfsfunktionen (14) zu versorgen, wobei diese Vorrichtung eine elektronische Steuerschaltung (12) umfasst, die dazu ausgelegt ist, einen Zähler während der Ladezeit, während derer der Akkumulator (4) in dem Ladegerät (2) ist, schrittweise zu inkrementieren und das Beenden der Ladung dieses Akkumulators (4) zu bewirken, wenn der Zähler einen Maximalwert (CPTMAX) erreicht hat, der der Nennladung des Akkumulators (4) entspricht, und den Zähler während der Entladezeit, während derer der Akkumulator (4) nicht in dem Ladegerät (2) ist, schrittweise zu dekrementieren, **dadurch gekennzeichnet, dass** der Zähler dazu ausgelegt ist, mit einer ersten Schrittweite dekrementiert zu werden, wenn nur die Zeitgeberfunktion verwendet wird, und mit einer zweiten Schrittweite, die von der ersten Schrittweite verschieden ist und von der oder den verwendeten Hilfsfunktionen (14) abhängt, dekrementiert zu werden, so dass, wenn der Zähler Null erreicht hat, das nächste durch die elektronische Steuerschaltung (12) zugelassene Laden erfolgt, bis der Zähler erneut seinen Wert (CPTMAX) erreicht hat, während dann, wenn der Akkumulator (4) wieder in das Ladegerät (2) zurückgegeben wird, bevor der Zähler Null erreicht hat, die elektronische Steuerschaltung (12) nur ein partielles Laden des Akkumulators (4) zulässt.

8. Vorrichtung nach Anspruch 7, **dadurch gekennzeichnet, dass** die elektronische Steuerschaltung (12) dazu ausgelegt ist, mit dem Inkrementieren des Zählers ausgehend von dem Zeitpunkt, zu dem ein Ladesteuersignal (V_{IN}), das angibt, dass der Akkumulator (4) in das Ladegerät (2) gegeben worden ist, in sie eingegeben wird, zu beginnen, und dass die elektronische Steuerschaltung (12) dazu ausgelegt ist, ein Ladeunterbrechungssignal (V_{OUT}) zu erzeugen, das bewirkt, dass das Laden des Akkumulators (12) unterbrochen wird, wenn der Zähler den Maximalwert (CPTMAX) erreicht hat, der der Nennladung des Akkumulators (4) entspricht.

9. Vorrichtung nach Anspruch 8, **dadurch gekennzeichnet, dass** das Ladeunterbrechungssignal (V_{OUT}) das Öffnen der Unterbrechungsmittel steuert.

10. Vorrichtung nach Anspruch 9, **dadurch gekennzeichnet, dass** die Unterbrechungsmittel einen Ein/Aus-Schalter (26) enthalten.

11. Vorrichtung nach einem der Ansprüche 7 bis 10, **dadurch gekennzeichnet, dass** die elektronische Steuerschaltung (12) ein Uhrwerkprozessor ist.

12. Vorrichtung nach Anspruch 11, **dadurch gekennzeichnet, dass** der Uhrwerkprozessor eine Zeitbasis und einen inkrementellen Zähler umfasst.

13. Vorrichtung nach Anspruch 12, **dadurch gekennzeichnet, dass** die Zeitbasis von einem Quarzoszillator (16) versorgt wird.
